# EUROPEAN PATENT APPLICATION

(11) **EP 2 640 126 A1**
(43) Date of publication of application: **18.09.2013**
(21) Application number: 11839407.1
(22) Date of filing: 10.11.2011
(51) Int. Cl.: H04W 28/22, H04M 3/00, H04W 88/18

(54) **CORE NETWORK AND COMMUNICATION SYSTEM**

(30) Priority: 12.11.2010 JP 2010254072
(71) Applicant: NTT DOCOMO, INC., Chiyoda-ku Tokyo 100-6150 (JP)
(72) Inventor: TANAKA, Itsuma, Tokyo 100-6150 (JP); IKEDA, Masataka, Tokyo 100-6150 (JP); TOKUNAGA, Kazuhito, Tokyo 100-6150 (JP)
(74) Representative: HOFFMANN EITLE
(86) International application number: PCT/JP2011/075897
(87) International publication number: WO 2012/063889

(57) **Abstract**

A core network connected to a mobile communication network and establishing voice communication between communication apparatuses receives a connection request that includes an identifier identifying a terminating communication apparatus, from the mobile communication network, to which an originating mobile communication apparatus is connected, and temporarily signals a first codec candidate that should be used by the originating mobile communication apparatus to the originating mobile communication apparatus. Then, the core network determines at least one codec that can be used in the terminating communication apparatus. When the codec that can be used in the terminating network is different from the codec to be used, which is temporarily selected to be actually used in the originating mobile communication apparatus, the core network specifies a second codec candidate that should be used in the originating mobile communication apparatus according to the codec that can be used in the terminating communication apparatus and signals the second codec candidate to the originating mobile communication apparatus.

## Description

### Technical Field

The present invention relates to core networks and communication systems for establishing voice communication between communication apparatuses.

### Background Art

In voice communication services using telephones, various codecs have been used. For example, the adaptive multi-rate wideband (AMR-WB) codec has been proposed as a codec for high-quality voice communication services. The AMR-WB, which is an improved version of the AMR codec currently used for telephones around the world, were standardized in 3GPP and are known as G.722.2 in ITU-T (see Non-Patent Documents 1 to 4). In the following description, the conventional AMR codec is called the adaptive multi-rate narrowband (AMR-NB) codec in order to differentiate it from the AMR-WB.

The transmission rate is 4.75 to 12.2 kbits/s in the AMR-NB, whereas the transmission rate in the AMR-WB is one of 12.65, 14.25, 15.85, 18.25, 19.85, 23.05, 23.85 kbits/s etc.. The AMR-WB consumes a wider bandwidth than the AMR-NB.

Currently, the AMR-WB has been becoming dominant, but the codecs that can be used in networks depend on networks. For example, a network might use the AMR-WB and the AMR-NB, whereas another network might use only the AMR-NB.

When a mobile communication apparatus, such as a cell phone, performs voice communication with a communication apparatus (such as a fixed-line phone or a cell phone) connected to a communication network other than the mobile communication network to which the mobile communication apparatus subscribes, a core network that connects the mobile communication network to the communication network establishes voice communication between the communication apparatuses. As such a core network, the IP multimedia subsystem (IMS) for establishing voice over Internet protocol (VoIP) communication between communication apparatuses has been proposed (see Non-Patent Document 5). The IMS is also known as a multimedia domain (MMD).

### Prior Art Documents

### Non-Patent Documents

Non-Patent Document 1: ITU-T Recommendation G.722.2; "Wideband coding of speech at around 16 kbits/s using Adaptive Multi-Rate Wideband (AMR-WB)", International Telecommunication Union, July 2003
Non-Patent Document 2: 3GPP TS 26.190 V5.1.0 (2001-12), 3rd Generation Partnership Project; Technical Specification Group Services and System Aspects; Speech Codec speech processing functions; "AMR Wideband speech codec; Transcoding functions", December 2001
Non-Patent Document 3: 3GPP TS 26.194 V5.0.0 (2001-03), 3rd Generation Partnership Project; Technical Specification Group Services and System Aspects; Speech Codec speech processing functions; "AMR Wideband speech codec; Voice Activity Detector (VAD)", March 2001
Non-Patent Document 4: 3GPP TS 26.171 V5.0.0 (2001-03), 3rd Generation Partnership Project; Technical Specification Group Services and System Aspects; Speech Codec speech processing functions; "AMR Wideband speech codec; General Description", March 2001
Non-Patent Document 5: 3GPP TS 23.228 V10.2.0 (2010-09), 3rd Generation Partnership Project; Technical Specification Group Services and System Aspects; "IP Multimedia Subsystem (IMS)"; Stage 2 (Release 10), September 2010

### Summary of Invention

### Technical Problems

For use of the IMS, an originating mobile communication apparatus utilizes a common codec that belongs to the intersection of codecs that can be used by the originating mobile communication apparatus and codecs that can be supported by the media gateway control function (MGCF) of the IMS. When a codec to be used by the originating mobile communication apparatus is selected, codecs that can be used by the terminating communication apparatus are not taken into account. Therefore, when a mobile communication apparatus that can use both the AMR-WB and the AMR-NB originates a call in a network that can use the AMR-WB, the mobile communication apparatus uses the AMR-WB.

In that case, when the terminating apparatus can only use the AMR-NB, the AMR-WB is used from the originating mobile communication apparatus to the media gateway (MGW) in the IMS core network, whereas the terminating network uses the AMR-NB. Even though the originating side uses the AMR-WB, which has a high transmission rate, since the terminating side uses the AMR-NB, which has a low transmission rate, voice eventually has low voice quality as a result of the AMR-NB. Thus, it is wasteful that the originating side consumes a wide bandwidth for the AMR-WB in light of the low voice quality which is finally obtained. Therefore, it is desirable that the wide bandwidth be reduced so that radio and core-network resources can be made available for communication performed by other users.

Accordingly, the present invention provides a core network and a communication system capable of using the bandwidth efficiently by matching, as closely as possible, the codec used at the originating side with the codec used at the terminating side.

### Solution to Problems

A core network according to the present invention is connected to a mobile communication network and establishes voice communication between communication apparatuses. The core network includes a connection-request receiver adapted for receiving a connection request that includes an identifier identifying a terminating communication apparatus, from the mobile communication network, to which an originating mobile communication apparatus is connected; an available-codec signaling section adapted for signaling a codec candidate that should be used by the originating mobile communication apparatus to the originating mobile communication apparatus; a connection-request transmission section adapted for sending a terminating-network connection request that specifies the terminating communication apparatus, to a terminating network to which the terminating communication apparatus is connected; a connection-request-response receiver adapted for receiving, from the terminating network, a terminating-network connection request response that includes information indicating at least one codec that can be used in the terminating communication apparatus; and a codec-to-be-used notification receiver adapted for receiving, from the originating mobile communication apparatus, a codec-to-be-used notification that indicates a codec to be used, which is selected to be actually used in the originating mobile communication apparatus. The available-codec signaling section is adapted for temporarily signaling a first codec candidate that should be used by the originating mobile communication apparatus to the originating mobile communication apparatus when the connection-request receiver receives the connection request. The available-codec signaling section is then adapted for determining whether or not the codec that can be used in the terminating communication apparatus, indicated by the terminating-network connection request response, matches the codec to be used, when the connection-request-response receiver receives the terminating-network connection request response. The available-codec signaling section is adapted for specifying a second codec candidate that should be used by the originating mobile communication apparatus according to the codec that can be used in the terminating communication apparatus and is adapted for signaling the second codec candidate to the originating mobile communication apparatus, when the determination is negative.

In the present invention, in response to the connection request sent from the originating mobile communication apparatus, the core network temporarily signals a first codec candidate that should be used by the originating mobile communication apparatus to the originating mobile communication apparatus. The originating mobile communication apparatus sends, to the core network, a codec-to-be-used notification that indicates a codec to be used, which is selected to be actually used in the originating mobile communication apparatus from among the first codec candidate. Upon receiving the codec-to-be-used notification, the core network temporarily ensures resources required for the codec to be used. On the other hand, the core network sends a terminating-network connection request to the terminating network to which the terminating communication apparatus is connected, and receives, from the terminating network, a terminating-network connection request response that includes information indicating at least one codec that can be used in the terminating communication apparatus. Upon receiving the terminating-network connection request response, the core network determines whether or not the codec that can be used in the terminating communication apparatus, indicated in the terminating-network connection request response, matches the codec to be used. If they do not match, the core network specifies a second codec candidate that should be used by the originating mobile communication apparatus according to the codec that can be used in the terminating communication apparatus, and signals the second codec candidate to the originating mobile communication apparatus. In contrast, when the codec that can be used in the terminating communication apparatus matches the codec to be used, the resources ensured for the codec to be used can be used without change for voice communication between the originating mobile communication apparatus and the core network, so that the time required for preparing for the voice communication is reduced.
In the foregoing description, "the core network is adapted for specifying a second codec candidate that should be used by the originating mobile communication apparatus according to the codec that can be used in the terminating communication apparatus" includes that the core network specifies the codec that can be used in the terminating communication apparatus as the second codec candidate and that the core network specifies a codec having a transmission rate closest to the transmission rate of the codec that can be used in the terminating communication apparatus as the second codec candidate. More specifically, if the codec that can be used in the terminating communication apparatus can also be used in the core network and the originating mobile communication apparatus, the codec that can be used in the terminating communication apparatus is specified as the second codec candidate. If the codec that can be used in the terminating communication apparatus cannot be used in the core network or the originating mobile communication apparatus, a codec having a transmission rate closest to the transmission rate of the codec that can be used in the terminating communication apparatus is specified as the second codec candidate, among codecs that can be used in the core network and the originating mobile communication apparatus. By doing so, the transmission rate of the codec to be used at the originating side is made close to the transmission rate of the codec used at the terminating side, reducing the bandwidth waste.
It is assumed, for example, that the core network and the originating mobile communication apparatus can use both the AMR-WB and the AMR-NB, and the codec to be used is determined temporarily to be the AMR-WB. If the codec that can be used in the terminating communication apparatus is the AMR-NB, the core network specifies the AMR-NB as the second codec candidate that should be used by the originating communication apparatus and signals the second codec candidate to the originating mobile communication apparatus. By doing so, the originating mobile communication apparatus and the core network perform voice communication by using the AMR-NB, which is the same type of codec being used in the terminating communication apparatus. By selecting the codec to be used for voice communication in the core network in a manner adapted to the terminating communication apparatus, as described above, the codec to be used at the originating side and the codec used at the terminating side can be matched as closely as possible. Therefore, the originating side uses the codec having a bandwidth suited to the voice quality to be obtained, so that the mobile communication network and the core network can use the bandwidth efficiently. In other words, the bandwidth required for the codec to be used at the originating side is reduced in conformity to the codec used at the terminating side, so that the radio and core-network resources can be made available for communication performed by other users.
On the other hand, if the codec to be used is determined to be the AMR-WB, and the codec that can be used in the terminating communication apparatus is the AMR-WB, the core network can use the resources ensured for the AMR-WB when the codec to be used was determined to be the AMR-WB, for voice communication between the originating mobile communication apparatus and the core network, reducing the time required for preparing for the voice communication.

It is preferable that the core network according to the present invention further include a terminating-network-codec determination section adapted for determining, on the basis of the identifier included in the connection request, at least one codec that can be used in the terminating network to which the terminating communication apparatus is connected, when the connection-request receiver receives the connection request. The available-codec signaling section is adapted for temporarily specifying the first codec candidate according to the at least one codec that can be used in the terminating network, determined by the terminating-network-codec determination section, when the connection-request receiver receives the connection request.
In the foregoing description, "the available-codec signaling section is adapted for temporarily specifying the first codec candidate according to the at least one codec that can be used in the terminating network" includes that the available-codec signaling section temporarily specifies the codec that can be used in the terminating network as the first codec candidate and that the available-codec signaling section temporarily specifies a codec having a transmission rate closest to the transmission rate of the codec that can be used in the terminating network as the first codec candidate. More specifically, if the codec that can be used in the terminating network can also be used in the core network and the originating mobile communication apparatus, the codec that can be used in the terminating network is specified as the first codec candidate. If the codec that can be used in the terminating network cannot be used in the core network or the originating mobile communication apparatus, a codec having a transmission rate closest to the transmission rate of the codec that can be used in the terminating network is specified as the first codec candidate, among codecs that can be used in the core network and the originating mobile communication apparatus.
As described above, the first codec candidate is used to temporarily determine the codec to be used. It is inferred that the codecs that can be used in the terminating communication apparatus are included in the codecs that can be used in the terminating network. Since the first codec candidate, which is used to temporarily determine the codec to be used, is specified according to the codecs that can be used in the terminating network, there is a higher possibility that the codec to be used and the codec that can be used in the terminating communication apparatus will match when compared later. If they match, the resources temporarily ensured for the codec to be used can be used without change for voice communication between the originating mobile communication apparatus and the core network, so that the time required for preparing for the voice communication may be reduced.

If there is a common codec that belongs to the intersection of a plurality of codecs that can be used by the originating mobile communication apparatus and the codec(s) signaled from the available-codec signaling section, the originating mobile communication apparatus specifies the common codec as the codec to be used, which should be used by the originating mobile communication apparatus. For example, if a plurality of codecs signaled from the available-codec signaling section are the same as a plurality of codecs that can be used by the originating mobile communication apparatus, the best codec among them may be specified. More specifically, if the codecs signaled from the available-codec signaling section are both the AMR-WB and the AMR-NB, and the originating mobile communication apparatus can use both the AMR-WB and the AMR-NB, the AMR-WB is selected. On the other hand, if a sole codec signaled from the available-codec signaling section is included in a plurality of codecs that can be used in the originating mobile communication apparatus, the sole codec is specified. More specifically, when the codec signaled from the available-codec signaling section is only the AMR-NB, and the originating mobile communication apparatus can use both the AMR-WB and the AMR-NB, the AMR-NB is selected.

The core network according to the present invention is not limited to an IMS core network. However, if the core network according to the present invention is an IMS core network, it is preferable that a media gateway control function (MGCF) function as the terminating-network-codec determination section and the available-codec signaling section. The reasons therefor are as follows: The MGCF belongs to the control plane (C-plane) in the IMS core network and is a physical connection point with another network. Since the MGCF knows the relationship between the terminating network that is connected to the IMS core network and a physical line connected to the terminating network, it is easy to provide the MGCF with the function of the terminating-network-codec determination section, which determines one or more codecs that can be used in the terminating network connected. In addition, since the MGCF sends back to the originating mobile communication apparatus one or more codec supported by the MGCF in response to the connection request from the originating mobile communication apparatus in accordance with the IMS core network, which has already been proposed, it is easy to provide the MGCF with the function of the available-codec signaling section.

When the core network according to the present invention is an IMS core network, a breakout gateway control function (BGCF) may function as the terminating-network-codec determination section, and the MGCF may function as the available-codec signaling section. The reasons therefor are as follows: When some MGCFs, each of which is a physical connection point (i.e., a breakout point) with a circuit switching network in the IMS core network, which has already been proposed, are located in the IMS core network, the BGCF selects an MGCF suited to the terminating network. In other words, the BGCF has a routing function based on the telephone number of the terminating apparatus. Therefore, if the terminating network is a circuit switching network, since the BGCF knows the relationship between the connected terminating network and the MGCF that is suited thereto, it is easy to provide the BGCF with the function of the terminating-network-codec determination section, which determines one or more codecs that can be used in the connected terminating network. In addition, since the MGCF sends back to the originating mobile communication apparatus one or more codecs supported by the MGCF in response to the connection request from the originating mobile communication apparatus in the IMS core network, which has already been proposed, it is easy to provide the MGCF with the function of the available-codec signaling section.

When the core network according to the present invention is an IMS core network, a serving call session control function (S-CSCF) may function as the terminating-network-codec determination section, and the MGCF may function as the available-codec signaling section. The reasons therefor are as follows: In the IMS core network, which has already been proposed, the S-CSCF has a routing function based on the telephone number of the terminating apparatus. Therefore, the S-CSCF can determine the connected terminating network, so that it is easy to provide the S-CSCF with the function of the terminating-network-codec determination section, which determines one or more codecs that can be used in the connected terminating network. In addition, since the MGCF sends back to the originating mobile communication apparatus one or more codecs supported by the MGCF in response to the connection request from the originating mobile communication apparatus in the IMS core network, which has already been proposed, it is easy to provide the MGCF with the function of the available-codec signaling section.

In another form, the available-codec signaling section may signal, as the first codec candidate, a codec that can be used in the core network to the originating mobile communication apparatus, when the connection-request receiver receives the connection request.
In other words, a codec that can be used in the core network may be signaled to the originating mobile communication apparatus as a first codec candidate without determining a codec that can be used in the terminating network. As described above, the first codec candidate is used to temporarily decide a codec to be used. When a codec that can be used in the core network is set to the first codec candidate, which is used to temporarily determine a codec to be used, there is a low possibility that the codec to be used and the codec that can be used in the terminating communication network will match when compared later. However, if they match, the resources temporarily ensured for the codec to be used can be used without change for voice communication between the originating mobile communication apparatus and the core network, so that the time required for preparing for the voice communication may be reduced.

A communication system according to the present invention includes the above-described core network, a mobile communication network connected to the core network, and a mobile communication apparatus that connects to the mobile communication network. The mobile communication apparatus is adapted for sending the connection request to the core network. When the mobile communication apparatus is notified of the first codec candidate and the second codec candidate from the available-codec signaling section, the mobile communication apparatus is adapted for selecting a common codec that belongs to the intersection of a plurality of codecs that can be used by the mobile communication apparatus and the first codec candidate or the second codec candidate, as a codec that is to be actually used by the mobile communication apparatus, and is adapted for sending the codec-to-be-used notification indicating the selected codec to be used, to the core network.
By selecting the codec to be used for voice communication in the core network in a manner adapted to the terminating network, as described above, the codec to be used at the originating side and the codec used at the terminating side can be matched as closely as possible.

### Brief Description of the Drawings

Fig. 1 is a block diagram showing the overall communication system according to embodiments of the present invention.
Fig. 2 is a view showing the structure of a database stored in a core network according to the embodiments of the present invention.
Fig. 3A is a part of a sequence diagram indicating an example information flow in a communication system according to a first embodiment of the present invention.
Fig. 3B is a part of the sequence diagram, following the part in Fig. 3A.
Fig. 3C is a part of the sequence diagram, following the part in Fig. 3B.
Fig. 3D is a part of the sequence diagram, following the part in Fig. 3C.
Fig. 4 is a part of a sequence diagram indicating an information flow in a communication system according to a second embodiment of the present invention.
Fig. 5 is a part of a sequence diagram indicating an information flow in a communication system according to a third embodiment of the present invention.
Fig. 6 is a part of a sequence diagram indicating an information flow in a communication system according to a fourth embodiment of the present invention.
Fig. 7 is a part of a sequence diagram indicating an information flow in a communication system according to a fifth embodiment of the present invention.

### Description of Embodiments.

Various embodiments of the present invention will be described below with reference to the attached drawings.

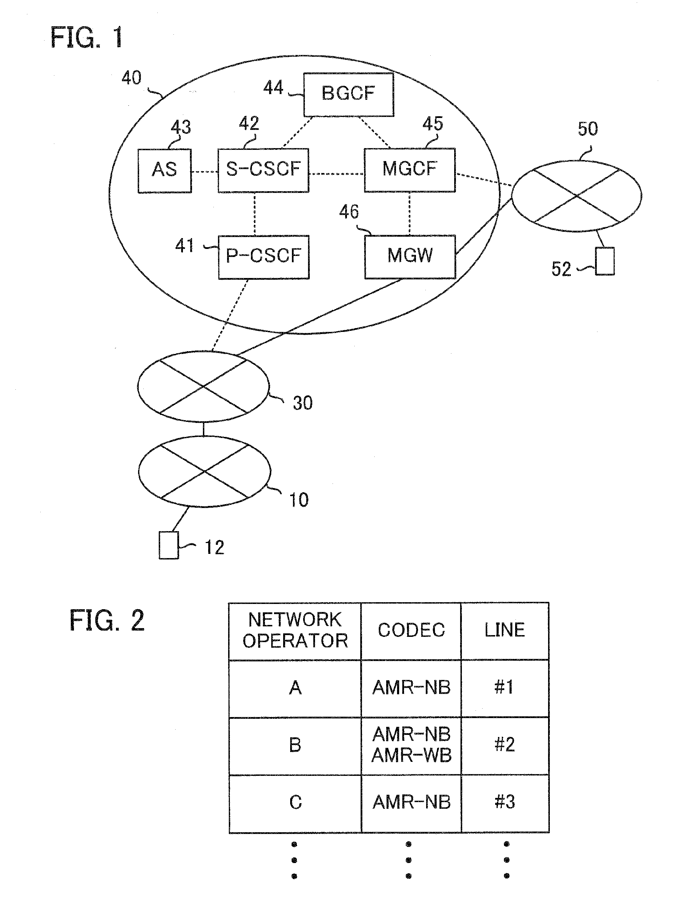

As shown in Fig. 1, a communication system according to embodiments of the present invention includes a mobile communication network 10, an evolved packet core (EPC) 30, and a core network 40. A large number of mobile communication apparatuses 12 are connected to the mobile communication network 10. The mobile communication apparatuses 12 are, for example, cell phones and other communication apparatuses having a voice communication function. The mobile communication network 10 conforms, for example, to long term evolution (LTE), but the specifications thereof are not limited to LTE. The EPC 30 manages the mobility of each of the mobile communication apparatuses 12. In the following description, the mobile communication apparatuses 12 may be called user equipments (UEs).

A plurality of external networks 50 are connected to the core network 40. The external networks 50 are circuit switching networks, such as public switched telephone networks (PSTNs) or public line mobile networks (PLMNs), or other networks (for example, networks conforming to SIP-I, in which ISUP messages are encapsulated within SIP messages and sent). A large number of communication apparatuses 52, such as cell phones or fixed-line telephones, are connected to each of the external networks 50. Therefore, the core network 40 establishes communication (including voice communication) between a mobile communication apparatus 12 connected to the mobile communication network 10 and capable of communicating via the IMS and a communication apparatus 52 connected to an external network 50.

The core network 40 is an IMS core network. The core network 40 includes various entities in addition to those shown in the figure, but includes the following main entities.

A proxy call session control function (P-CSCF) 41 is a session initiation protocol (SIP) router that receives SIP messages from the mobile communication apparatus 12 and sends SIP messages to the mobile communication apparatus 12.

A serving call session control function (S-CSCF) 42 is an SIP router providing the following functions:
- Managing the registration information and the provided service information of users.
- Managing user sessions.
- Selecting an application server 43 that provides a service for each user.
The S-CSCF 42 also has a routing function based on the telephone numbers of terminating apparatuses.

The application server (AS) 43 provides a voice application by using SIP. In voice communication between users, the AS 43 provides, for example, additional services such as voice guidance.

A breakout gateway control function (BGCF) 44 also has a routing function based on the telephone numbers of terminating apparatuses. The BGCF 44 is used only for call origination from the IMS to a communication apparatus connected to a circuit switching network, such as a PSTN or a PLMN. In other words, the BGCF 44 is used only when a call is originated to a communication apparatus 52 connected to an external network 50 that is a circuit switching network. When some MGCFs 45, each of which is a physical connection point (i.e., a breakout point) with a circuit switching network, are located in the IMS core network, the BGCF 44 selects an MGCF suited to the terminating network.

The media gateway control function (MGCF) 45 is a breakout point to a circuit switching network, in the IMS core network 40. The MGCF 45 handles C-plane control protocol conversion between the IMS core network 40 and the external network 50. Specifically, the MGCF 45 handles conversion between the SIP used in IMS control signals, and the ISDN user part (ISUP) or the bearer independent call control (BICC) used in control signals in a circuit switching network. The MGCF 45 controls the resources of a media gateway (MGW) 46 by using the H.248 protocol.

The media gateway (MGW) 46 has an interface function for user data, such as voice, in the user plane (U-plane) when connected to the external network 50. Specifically, when the codec used from a mobile communication apparatus 12 to the core network 40 and the codec used in an external network 50 are not the same, the MGW performs code conversion between the codecs.

In Fig. 1, in the core network 40, dotted lines indicate the C-plane and solid lines indicate the U-plane. The U-plane is also called a media plane in the IMS.

### First embodiment

It is assumed that a mobile communication apparatus 12 connected to the mobile communication network 10 and capable of communicating via the IMS originates a call in order to perform voice communication with a communication apparatus 52 connected to an external network 50. The mobile communication apparatus 12 sends a connection request (SIP_INVITE) that includes an identifier (such as the telephone number) for identifying the terminating communication apparatus 52 and information indicating a plurality of codecs that can be used by the mobile communication apparatus 12. SIP_INVITE reaches the core network 40 through the mobile communication network 10 and the EPC 30 and is received by the P-CSCF (connection-request receiver) 41. SIP_INVITE is forwarded from the P-CSCF to the S-CSCF 42, and the S-CSCF (terminating-network determination section, terminating-network-codec determination section) 42 determines the terminating external network 50 to which the terminating apparatus 52 is connected, on the basis of the identifier of the terminating communication apparatus 52. The S-CSCF 42 forwards SIP_INVITE to the BGCF 44 in order to connect to the determined terminating network. The BGCF 44 selects an appropriate MGCF 45 and forwards SIP_INVITE to the MGCF 45.

The MGCF (terminating-network-codec determination section) 45 determines at least one codec that can be used in the terminating external network 50 to which the terminating communication apparatus 52 is connected, according to a database related to external networks. Specifically, the S-CSCF 42 and the MGCF 45 coordinate with each other to serve as a terminating-network-codec determination section that determines at least one codec that can be used in the terminating external network 50, on the basis of the identifier of the terminating communication apparatus 52. When the at least one codec that can be used in the terminating external network 50, determined in this way, can also be used in the core network 40 and the originating mobile communication apparatus 12, the MGCF (available-codec signaling section) 45 signals the codec to the originating mobile communication apparatus 12 as a codec candidate (a first codec candidate) that should be used by the originating mobile communication apparatus 12. In contrast, when the at least one codec that can be used in the terminating external network 50 cannot be used in the core network 40 or the originating mobile communication apparatus 12, the MGCF (available-codec signaling section) 45 signals, to the originating mobile communication apparatus 12, a codec having a transmission rate closest to the transmission rate of the codec that can be used in the terminating external network 50, among codecs that can be used in the core network 40 and the originating mobile communication apparatus 12, as a codec candidate (a first codec candidate) that should be used by the originating mobile communication apparatus 12. An SIP_183 message is used to signal the first codec candidate.

For example, if the terminating network can use the AMR-NB only and the core network can use both the AMR-WB and the AMR-NB, the AMR-NB is selected. By selecting the codec to be used for voice communication in the core network in a manner adapted to the terminating communication apparatus as described above, the codec to be used at the originating side and the codec used at the terminating side can be matched as closely as possible.

Upon receiving the notification of the first codec candidate(s), the originating mobile communication apparatus 12 selects a common codec that belongs to the intersection of a plurality of codecs that can be used by the mobile communication apparatus 12 and the signaled codec(s), as the codec to be actually used by the mobile communication apparatus 12, and sends a codec-to-be-used notification (SIP_PRACK) indicating the selected codec to be used, to the core network.

For example, if the SIP_183 message indicates a plurality of codecs as first codec candidates, and those codecs are the same as a plurality of codecs that can be used in the originating mobile communication apparatus 12, the mobile communication apparatus 12 specifies the best codec among them. More specifically, if the SIP_183 message indicates that both the AMR-WB and the AMR-NB can be used, and both the AMR-WB and the AMR-NB can also be used in the originating mobile communication apparatus 12, the mobile communication apparatus 12 selects the AMR-WB. On the other hand, if the SIP_183 message indicates only one codec as the first codec candidate, and if that codec is included in a plurality of codecs that can be used in the originating mobile communication apparatus 12, the mobile communication apparatus 12 selects that one codec. More specifically, when the SIP_183 message indicates that only the AMR-NB can be used, and both the AMR-WB and the AMR-NB can be used in the originating mobile communication apparatus 12, the mobile communication apparatus 12 selects the AMR-NB. In this manner, the codec that is to be actually used in the originating mobile communication apparatus 12 is decided.

However, the codec to be used, determined by the originating mobile communication apparatus 12 in response to the first codec candidate, is a temporary one. In a later stage, it is determined whether the codec to be used is identical to a codec that can be used by the terminating communication apparatus 52; and, if the determination result is negative, the codec to be used, which is a temporary one, is canceled and another codec is actually used.

The P-CSCF (codec-to-be-used-notification receiver) 41 receives the codec-to-be-used notification (SIP_PRACK) and forwards it to the MGCF 45. Upon receiving the codec-to-be-used notification (SIP_PRACK), the MGCF 45 uses the H.248 protocol to control the MGW 46 such that the MGW 46 ensures the resources required for the codec to be used by the originating mobile communication apparatus 12.

In the present embodiment, the MGCF 45 functions as the terminating-network-codec determination section and the available-codec signaling section. The reasons therefor are as follows: The MGCF belongs to the C-plane in the IMS core network and is a physical connection point (i.e., breakout point) with another network. Since the MGCF knows the relationship between the terminating external network 50 that is connected and the network operator, it is easy to provide the MGCF 45 with the function of the terminating-network-codec determination section, which determines one or more codecs that can be used in the terminating external network 50 that is connected. In addition, since the MGCF sends back to the originating mobile communication apparatus 12 one or more codecs supported by the MGCF in response to the connection request (SIP_INVITE) from the originating mobile communication apparatus 12 in accordance with the IMS core network, which has already been proposed, it is easy to provide the MGCF with the function of the available-codec signaling section.

To function as the terminating-network-codec determination section, the MGCF 45 stores a database shown in Fig. 2. This database indicates the relationship among network operators (in other words, networks operated by network operators), codecs that can be used in the networks operated by the network operators, and physical lines connected to the networks. Therefore, if the terminating network is determined, the MGCF 45 can determine the codec(s) that can be used in the network. The database shown in Fig. 2 is just an example, and the MGCF may have any form of data so long as the data describes the relationship between the networks and codecs.

The MGCF 45 (connection-request transmission section) sends an ISUP initial address message (IAM) as a terminating-network connection request that specifies the terminating communication apparatus 52, to the external terminating network 50 to which the terminating communication apparatus 52 is connected. In response to the IAM, the external terminating network 50 sends an application transport message (APM) as a terminating-network connection request response that includes information indicating at least one codec that can be used in the terminating communication apparatus 52. The MGCF 45 (connection-request-response receiver) receives the APM and determines whether or not the at least one codec that can be used in the terminating communication apparatus 52, indicated in the APM, is identical to the codec to be used, which was determined in advance temporarily.

If the determination result is affirmative (that is, if any of the codecs that can be used in the terminating communication apparatus 52 is identical to the codec to be used), the resources ensured for the codec to be used can be used without change for voice communication between the originating mobile communication apparatus 12 and the core network 40, so that the time required for preparing for the voice communication is reduced. For example, if the codec to be used is determined to be the AMR-WB, and the codec that can be used in the terminating communication apparatus 52 is the AMR-WB, the MGW 46 can use the resources ensured for the AMR-WB when the codec to be used was determined to be the AMR-WB, for voice communication between the originating mobile communication apparatus 12 and the MGW 46.

In contrast, if the determination result is negative (that is, if any of the codecs that can be used in the terminating communication apparatus 52 is different from the codec to be used), the MGCF 45 specifies at least one second codec candidate to be used in the originating mobile communication apparatus 12, according to the codecs that can be used in the terminating communication apparatus 52, and signals the at least one second codec candidate to the originating mobile communication apparatus 12. To signal the second codec candidates, an SIP_Update message is used.

More specifically, if any of the codecs that can be used in the terminating communication apparatus 52 can be used also in the core network 40 and the originating mobile communication apparatus 12, the codec that can be used in the terminating communication apparatus 52 is specified as the second codec candidate. If any of the codecs that can be used in the terminating communication apparatus 52 cannot be used in the core network 40 or the originating mobile communication apparatus 12, a codec having a transmission rate closest to the transmission rate of one of the codecs that can be used in the terminating communication apparatus 52 is specified as the second codec candidate, among codecs that can be used in the core network 40 and the originating mobile communication apparatus 12. By doing so, the transmission rate of the codec to be used at the originating side is made close to the transmission rate of the codec used at the terminating side, reducing the bandwidth waste.

It is assumed, for example, that the core network 40 and the originating mobile communication apparatus 12 can use both the AMR-WB and the AMR-NB, and the codec to be used is determined temporarily to be the AMR-WB. If the codec that can be used in the terminating communication apparatus is the AMR-NB, the MGCF 45 specifies the AMR-NB as the second codec candidate that should be used by the originating communication apparatus 12 and signals the second codec candidate to the originating mobile communication apparatus 12. By doing so, the originating mobile communication apparatus 12 and the MGW 46 perform voice communication by using the AMR-NB, which is the same type of codec being used in the terminating communication apparatus 52. By selecting a codec to be used for voice communication in the core network 40 in a manner adapted to the terminating communication apparatus 52, as described above, the codec to be used at the originating side and the codec used at the terminating side can be matched as closely as possible. Therefore, the originating side uses the codec having a bandwidth suited to the voice quality to be obtained, so that the mobile communication network 10 and the core network 40 can use the bandwidth efficiently. In other words, the bandwidth required for the codec to be used at the originating side is reduced in conformity to the codec used at the terminating side, so that the radio and core-network resources can be made available for communication performed by other users.

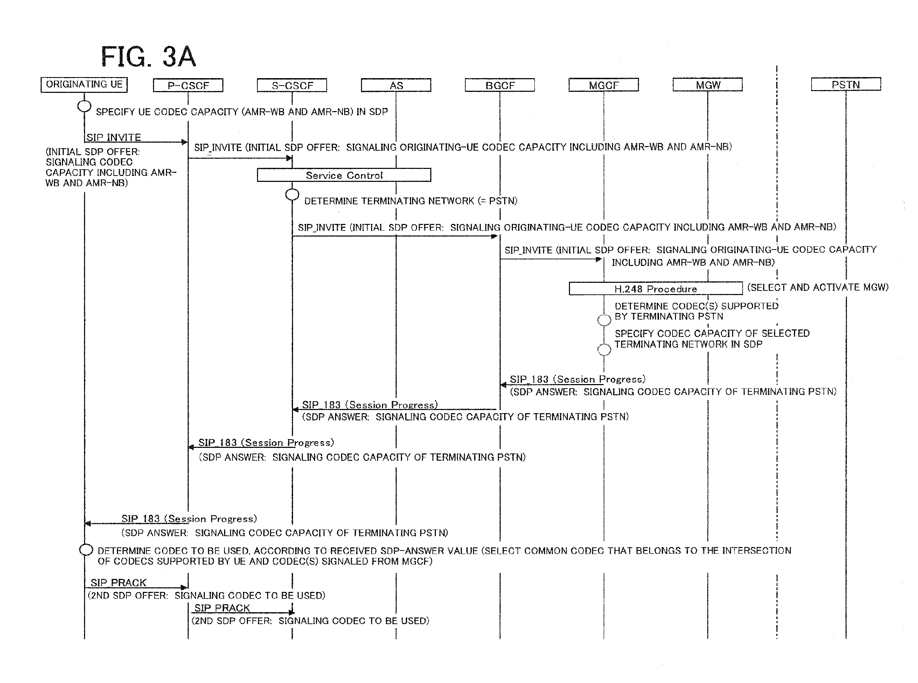

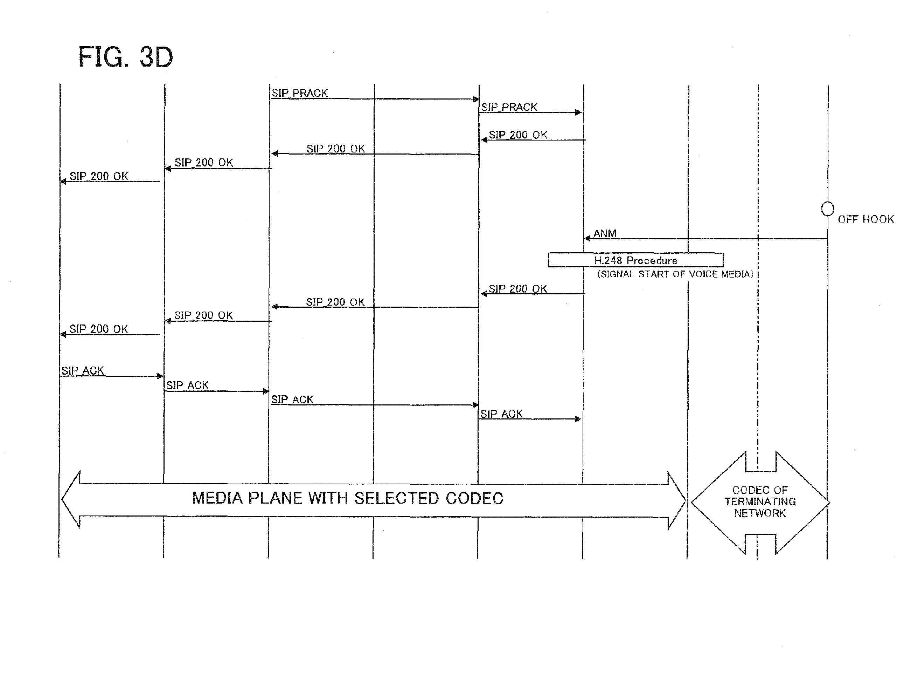

An example information flow in the communication system according to the first embodiment will be described with reference to Fig. 3A to Fig. 3D. For convenience, the mobile communication network 10 and the EPC 30 are omitted from the figures. In the following description, it is assumed that the UE originates a call in order to perform voice communication with a communication apparatus 52 connected to an external network 50.

The telephone number of the communication apparatus 52 is input to the UE. The UE generates SIP_INVITE that includes Initial SDP Offer describing the UE codec capacity (codecs that can be used in the UE) according to the session description protocol (SDP). SIP_INVITE describes the telephone number of the communication apparatus 52 and the UE codec capacity (in this example, both the AMR-WB and the AMR-NB can be used in the UE). The reason for that SIP_INVITE describes the UE codec capacity is that it is requested by the IMS. The UE sends the generated SIP_INVITE to the P-CSCF, and the P-CSCF (connection-request receiver) transfers SIP_INVITE to the S-CSCF.

Upon receiving SIP_INVITE, the S-CSCF (terminating-network determination section, terminating-network-codec determination section) requests the AS to perform service control, if necessary, and determines the terminating external network on the basis of the telephone number of the communication apparatus 52. In this example, the terminating network is a PSTN, but the terminating network may be another circuit switching network, such as a PLMN, or another type of network.

The S-CSCF transfers SIP_INVITE to the BGCF. The BGCF selects an MGCF suited to the PSTN, which is the terminating network, and transfers SIP_INVITE to the MGCF. The MGCF selects an MGW to be used for voice communication and uses the H.248 protocol to activate the MGW.

The MGCF (terminating-network-codec determination section) determines at least one codec that can be used in the terminating network (that is, at least one codec supported by the terminating network), according to the terminating network. The MGCF further determines whether or not there is any common codec that belongs to the intersection of a plurality of codecs that can be used in the IMS core network 40 and the codec(s) that can be used in the terminating network. If a common codec exists, the MGCF generates an SIP_183 message (session progress) that includes SDP Answer describing the common codec (if there are a plurality of common codecs, all the codecs are described in SDP Answer) as a first codec candidate (or as first codec candidates). If no common codec exists, the MGCF generates an SIP_183 message (session progress) that includes SDP Answer describing all the codecs that can be used in the IMS core network 40 as first codec candidates.

Alternatively, if no common codec exists, it is preferable that the MGCF generate an SIP_183 message (session progress) that includes SDP Answer describing a codec that has a transmission rate closest to the transmission rate of one of the codecs that can be used in the terminating network, among all the codecs that can be used in the IMS core network 40. By doing so, the transmission rate of the codec temporarily decided to be used at the originating side is made close to the transmission rate of the codec used at the terminating side, reducing the bandwidth waste.

The MGCF (available-codec signaling section) sends the SIP_183 message (session progress) to the originating UE. The SIP_183 message (session progress) reaches the originating UE through the BGCF, the S-CSCF, and the P-CSCF. The UE temporarily decides, that is, selects, the codec that should be used, from the value of SDP Answer in the received SIP_183 message (session progress). Specifically, the UE temporarily selects a common codec that belongs to the intersection of the codecs supported by the UE and the codec(s) signaled from the MGCF, as the codec to be actually used by the UE.

If the codec (s) signaled from the MGCF can be used in the IMS core network 40 and also in the terminating network, the codec temporarily selected by the UE to be used can also be used in the terminating network. If the codec(s) signaled from the MGCF can be used in the IMS core network 40 but cannot be used in the terminating network, the codec temporarily selected by the UE to be used cannot be used in the terminating network and is used between the UE and MGW only. In that case, the MGW performs code conversion between the codecs.

As described above, the first codec candidate is used to temporarily determine the codec to be used. It is inferred that the codecs that can be used in the terminating communication apparatus 52 are included in the codecs that can be used in the external terminating network 50. Since the first codec candidate, which is used to temporarily determine the codec to be used, is specified according to the codecs that can be used in the external terminating network 50, there is a higher possibility that the codec to be used and the codec that can be used in the terminating communication apparatus 52 will match when compared later. If they match, the resources temporarily ensured for the codec to be used can be used without change for voice communication between the originating UE and the MGW, so that the time required for preparing for the voice communication may be reduced.

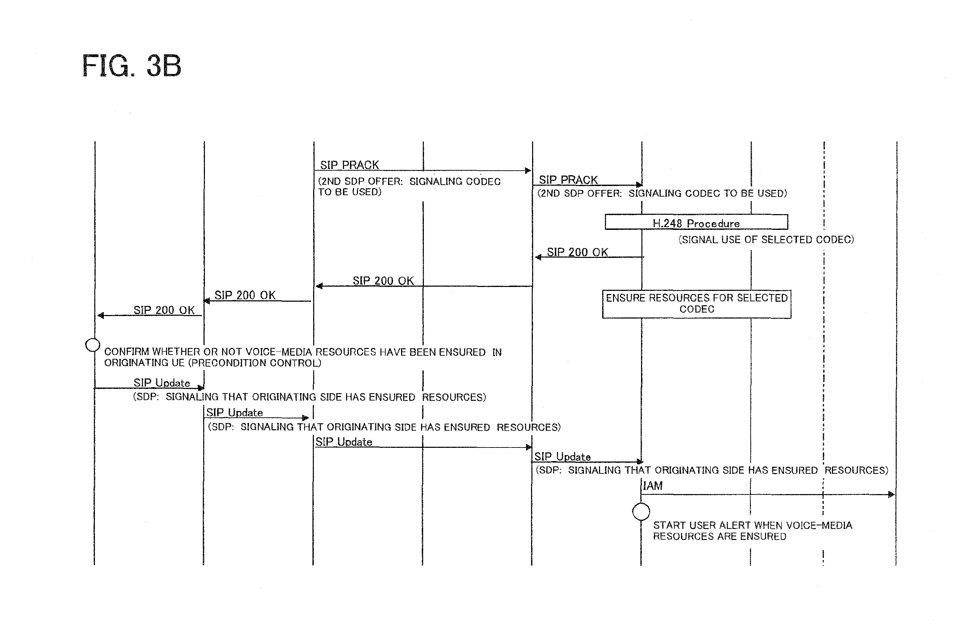

Next, the UE generates, according to the SDP, SIP_PRACK that includes 2nd SDP Offer indicating the selected codec to be used, which is a codec-to-be-used notification, and sends SIP_PRACK to the core network 40. SIP_PRACK is received by the P-CSCF (codec-to-be-used-notification receiver) and reaches the MGCF through the S-CSCF and the BGCF (see Fig. 3B). The MGCF uses the H. 248 protocol to signal to the MGW the codec temporarily selected by the UE to be used, and the MGW ensures the resources required for the codec.

The MGCF sends back SIP_200 OK to the UE. Upon receiving SIP_200 OK, the UE confirms whether or not voice-media resources have been ensured inside the UE (precondition control). After the confirmation, the UE sends SIP_Update to the MGCF, which signals that the UE has ensured the resources. Upon receiving SIP_Update, the MGCF (connection-request transmission section) sends an ISUP initial address message (IAM) to the terminating external network 50 as a terminating-network connection request. In other words, the MGCF requests the external network 50 to call the terminating communication apparatus 52. This IAM includes information indicating the codec temporarily selected by the UE to be used. If that codec can also be used in the terminating communication apparatus 52, it is expected that the communication apparatus 52 will use the codec.

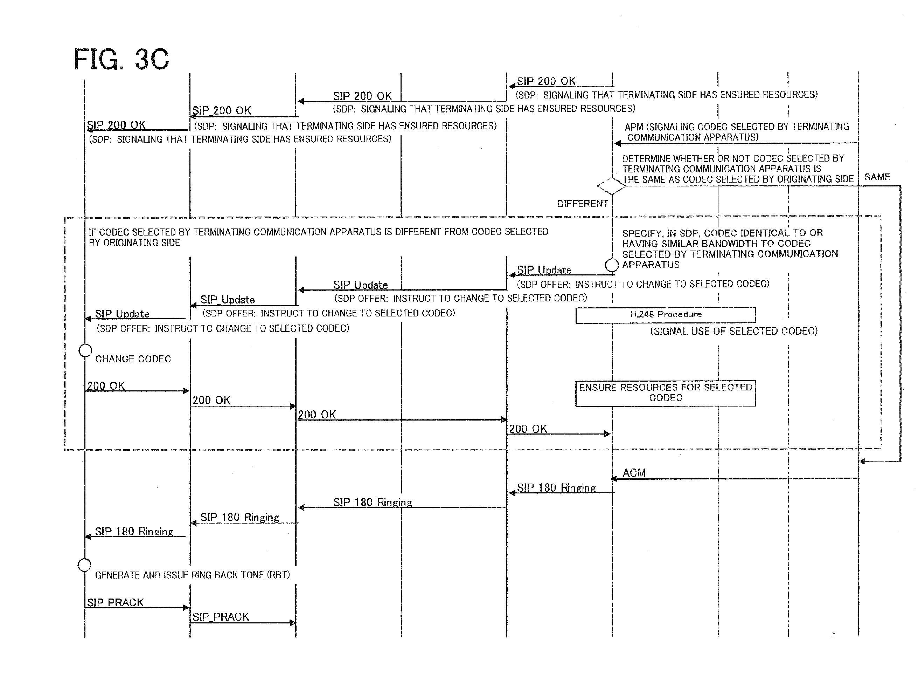

When the core network 40 ensures voice-media resources for this voice communication, the MGCF starts USER ALERT, generates SIP_200 OK for signaling that the terminating side has ensured the resources, and sends SIP_200 OK to the UE (see Fig. 3C).

In response to the IAM, the external terminating network 50 sends an application transport message (APM) as a terminating-network connection request response that includes information indicating at least one codec that can be used in the terminating communication apparatus 52. The MGCF 45 (connection-request-response receiver) receives the APM and determines whether or not the codec indicated in the APM and selected by the terminating communication apparatus 52 is identical to the codec to be used, which was determined in advance temporarily.

If the determination result is affirmative (that is, if the codec selected by the terminating communication apparatus 52 is identical to the codec to be used), processes enclosed by a dotted line in Fig. 3C are skipped. In that case, the resources ensured for the codec to be used are used without change for voice communication between the originating UE and the core network 40.

In contrast, if the determination result is negative (that is, if the codec selected by the terminating communication apparatus 52 is different from the codec to be used), the processes enclosed by the dotted line in Fig. 3C are executed. Specifically, if the codec selected by the terminating communication apparatus 52 can also be used in the core network 40 and the originating UE, the MGCF (available-codec signaling section) 45 generates an SIP_Update message that includes SDP Offer indicating the codec selected by the terminating communication apparatus 52 as a second codec candidate, according to the SDP, and sends the message to the UE.

If the codec selected by the terminating communication apparatus 52 cannot be used in the core network 40 or the originating UE, the MGCF (available-codec signaling section) specifies a codec having a transmission rate closest to the transmission rate of one of the codecs that can be used in the terminating communication apparatus 52, among the codecs that can be used in the core network 40 and the UE, as the second codec candidate. Then, the MGCF generates an SIP_Update message that includes SDP Offer indicating the specified codec as the second codec candidate, according to the SDP, and sends the message to the UE. In other words, this SIP_Update message instructs that the codec to be used, already determined temporarily, should be changed to the codec selected by the terminating communication apparatus 52 or a codec having a similar bandwidth. If the second codec candidate is different from the codec selected by the communication apparatus 52, the second codec candidate cannot be used in the terminating network and is used only between the UE and the MGW. In that case, the MGW performs code conversion between the codecs.

The SIP_Update message reaches the UE through the BGCF, the S-CSCF, and the P-CSCF. The UE changes the codec according to the received SIP_Update message. In this way, the temporary codec to be used is canceled and another codec is actually used. Then, the UE sends SIP_200 OK indicating the completion of the change of the codec to the MGCF.

The MGCF signals the determined codec to be used (that is, the codec selected to replace the temporary codec to be used) to the MGW with the H. 248 protocol, and the MGW ensures resources required for the codec.

After processes enclosed by the dotted line in Fig. 3C are executed or skipped, upon receiving an ISUP address complete message (ACM) from the terminating external network 50, the MGCF sends an SIP_180 ringing message to the UE. This message indicates that the terminating apparatus is being called.

Upon receiving the SIP_180 ringing message, the UE generates a ring back tone and issues it. The UE also sends SIP_PRACK to the MGCF, and the MGCF sends back SIP_200 OK in response.

In the external network 50, when the communication apparatus 52 becomes off-hook in response to the calling, the external network 50 sends an answer message (ANM) to the MGCF. The MGW signals to the MGCF by using the H.248 protocol that the communication apparatus 52 became off-hook and voice-media communication has started. Then, the MGCF sends SIP_200 OK to the UE, and the UE sends back SIP_ACK in response.

### Second embodiment

In the IMS core network 40, the BGCF 44 may determine one or more codecs that can be used in the terminating external network 50. In other words, the BGCF 44 may function as the terminating-network-codec determination section. If some MGCFs, each of which is a physical connection point (i.e., a breakout point) with a circuit switching network are located in the IMS core network, which has already been proposed, the BGCF selects an MGCF suited to the terminating external network 50. In other words, the BGCF has a routing function based on the telephone number of the terminating apparatus. Therefore, if the terminating external network 50 is a circuit switching network, since the BGCF knows the relationship between the terminating external network 50 that is connected to the core network and the MGCF suited thereto, it is easy to provide the BGCF with the function of the terminating-network-codec determination section, which determines one or more codecs that can be used in the terminating external network 50 that is connected.

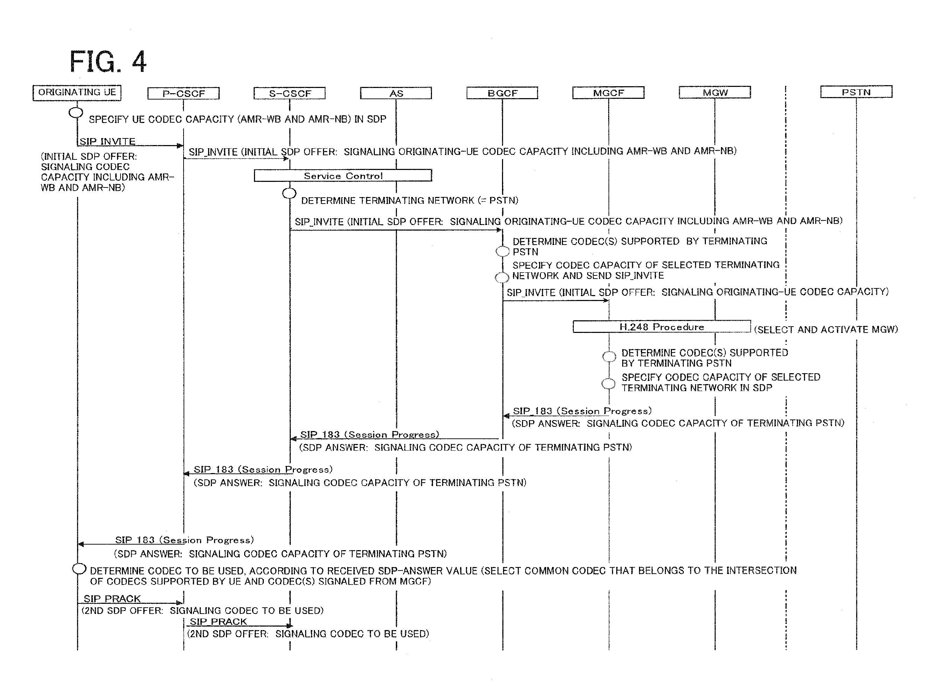

An example information flow in a communication system according to the second embodiment will be described with reference to Fig. 4. In the same way as in Fig. 3A to Fig. 3C, for convenience, the mobile communication network 10 and the EPC 30 are omitted from the figure. In the following description, it is assumed that the UE originates a call in order to perform voice communication with a communication apparatus 52 connected to an external network 50.

The telephone number of the communication apparatus 52 is input to the UE. The UE generates SIP_INVITE that includes Initial SDP Offer describing the UE codec capacity (codecs that can be used in the UE) according to the session description protocol (SDP). SIP_INVITE describes the telephone number of the communication apparatus 52 and the UE codec capacity (in this example, both the AMR-WB and the AMR-NB can be used in the UE). The reason for that SIP_INVITE describes the UE codec capacity is that it is requested by the IMS. The UE sends the generated SIP_INVITE to the P-CSCF, and the P-CSCF (connection-request receiver) transfers SIP_INVITE to the S-CSCF.

Upon receiving SIP_INVITE, the S-CSCF (terminating-network determination section, terminating-network-codec determination section) requests the AS to perform service control, if necessary, and determines the terminating external network on the basis of the telephone number of the communication apparatus 52. In this example, the terminating network is a PSTN, but the terminating network may be another circuit switching network, such as a PLMN, or another type of network.

The S-CSCF transfers SIP_INVITE to the BGCF. The BGCF (terminating-network-codec determination section) determines at least one codec that can be used in the terminating network (that is, at least one codec supported by the terminating network), according to the terminating network. The BGCF generates SIP_INVITE that describes this codec. When generating this SIP_INVITE, the BGCF may change the UE codec capacity described in Initial SDP Offer in the received SIP_INVITE to the codec capacity supported in the terminating network, or may add a new information element that describes the codec capacity supported in the terminating network to the received SIP_INVITE, separately from Initial SDP Offer that describes the UE codec capacity.

The BGCF selects an MGCF suited to the PSTN, which is the terminating network, and transfers SIP_INVITE generated by the BGCF to the MGCF. The MGCF selects an MGW to be used for this voice communication and uses the H.248 protocol to activate the MGW.

The MGCF further determines whether or not there is any common codec that belongs to the intersection of a plurality of codecs that can be used in the IMS core network 40 and the codec(s) that can be used in the terminating network. If a common codec exists, the MGCF generates an SIP_183 message (session progress) that includes SDP Answer describing the common codec (if there are a plurality of common codecs, all the codecs are described in SDP Answer) as a first codec candidate (or as first codec candidates). If no common codec exists, the MGCF generates an SIP_183 message (session progress) that includes SDP Answer describing all the codecs that can be used in the IMS core network 40 as first codec candidates.

Alternatively, if no common codec exists, it is preferable that the MGCF generate an SIP_183 message (session progress) that includes SDP Answer describing a codec that has a transmission rate closest to the transmission rate of one of the codecs that can be used in the terminating network, among all the codecs that can be used in the IMS core network 40, as a first codec candidate. By doing so, the transmission rate of the codec temporarily decided to be used at the originating side is made close to the transmission rate of the codec used at the terminating side, reducing the bandwidth waste.

The MGCF (available-codec signaling section) sends the SIP_183 message (session progress) to the originating UE. The SIP_183 message (session progress) reaches the originating UE through the BGCF, the S-CSCF, and the P-CSCF. The UE temporarily decides, that is, selects, the codec that should be used, from the value of SDP Answer in the received SIP_183 message (session progress). Specifically, the UE temporarily selects a common codec that belongs to the intersection of the codecs supported by the UE and the codec(s) signaled from the MGCF, as the codec to be actually used by the UE.

If the codec (s) signaled from the MGCF can be used in the IMS core network 40 and also in the terminating network, the codec temporarily selected by the UE to be used can also be used in the terminating network. If the codec(s) signaled from the MGCF can be used in the IMS core network 40 but cannot be used in the terminating network, the codec temporarily selected by the UE to be used cannot be used in the terminating network and is used between the UE and MGW only. In that case, the MGW performs code conversion between the codecs.

As described above, the first codec candidate is used to temporarily determine a codec to be used. It is inferred that the codecs that can be used in the terminating communication apparatus 52 are included in the codecs that can be used in the external terminating network 50. Since the first codec candidate, which is used to temporarily determine a codec to be used, is specified according to the codecs that can be used in the external terminating network 50, there is a higher possibility that the codec to be used and the codec that can be used in the terminating communication network 52 will match when compared later. If they match, the resources temporarily ensured for the codec to be used can be used without change for voice communication between the originating UE and the MGW, so that the time required for preparing for the voice communication may be reduced.

Next, the UE generates, according to the SDP, SIP_PRACK that includes 2nd SDP Offer indicating the selected codec to be used, which is a codec-to-be-used notification, and sends SIP_PRACK to the core network 40. SIP_PRACK is received by the P-CSCF (codec-to-be-used-notification receiver) and reaches the MGCF through the S-CSCF and the BGCF (see Fig. 3B). The MGCF uses the H.248 protocol to signal to the MGW the codec temporarily decided by the UE to be used, and the MGW ensures the resources required for the codec.

The subsequent steps are the same as those described in the first embodiment with reference to Fig. 3B to Fig. 3D.

### Third embodiment

In the IMS core network 40, the S-CSCF 42 may determine one or more codecs that can be used in the terminating external network 50. In other words, the S-CSCF 42 may function as the terminating-network-codec determination section. In the IMS core network, which has already been proposed, the S-CSCF has a routing function based on the telephone number of the terminating apparatus. Therefore, the S-CSCF can determine the terminating network that is connected to the core network, so that it is easy to provide the S-CSCF with the function of the terminating-network-codec determination section, which determines one or more codecs that can be used in the terminating network that is connected.

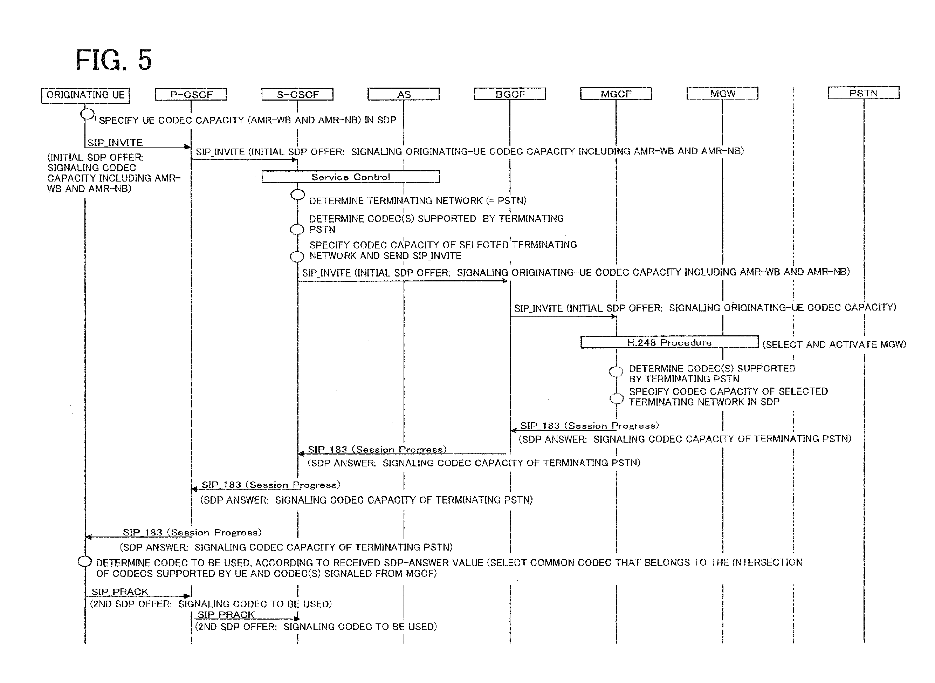

An example information flow in a communication system according to the third embodiment will be described with reference to Fig. 5. In the same way as in Fig. 3A to Fig. 3C, for convenience, the mobile communication network 10 and the EPC 30 are omitted from the figure. In the following description, it is assumed that the UE originates a call in order to perform voice communication with a communication apparatus 52 connected to an external network 50.

The telephone number of the communication apparatus 52 is input to the UE. The UE generates SIP_INVITE that includes Initial SDP Offer describing the UE codec capacity (codecs that can be used in the UE) according to the session description protocol (SDP). SIP_INVITE describes the telephone number of the communication apparatus 52 and the UE codec capacity (in this example, both the AMR-WB and the AMR-NB can be used in the UE). The reason for that SIP_INVITE describes the UE codec capacity is that it is requested by the IMS. The UE sends the generated SIP_INVITE to the P-CSCF, and the P-CSCF (connection-request receiver) transfers SIP_INVITE to the S-CSCF.

Upon receiving SIP_INVITE, the S-CSCF (terminating-network determination section, terminating-network-codec determination section) requests the AS to perform service control, if necessary, and determines the terminating external network on the basis of the telephone number of the communication apparatus 52. In this example, the terminating network is a PSTN, but the terminating network may be another circuit switching network, such as a PLMN, or another type of network.

The S-CSCF determines at least one codec that can be used in the terminating network (that is, at least one codec supported by the terminating network), according to the terminating network. The S-CSCF generates SIP_INVITE that describes this codec. When generating this SIP_INVITE, the S-CSCF may change the UE codec capacity described in Initial SDP Offer in the received SIP_INVITE to the codec capacity supported in the terminating network, or may add a new information element that describes the codec capacity supported in the terminating network to the received SIP_INVITE, separately from Initial SDP Offer that describes the UE codec capacity. The S-CSCF sends SIP_INVITE generated in the S-CSCF to the BGCF.

The BGCF selects an MGCF suited to the PSTN, which is the terminating network, and transfers SIP_INVITE received from the S-CSCF 42 to the MGCF without change. The MGCF selects an MGW to be used for this voice communication and uses the H.248 protocol to activate the MGW.

The MGCF further determines whether or not there is any common codec that belongs to the intersection of a plurality of codecs that can be used in the IMS core network 40 and the codec that can be used in the terminating network. If a common codec exists, the MGCF generates an SIP_183 message (session progress) that includes SDP Answer describing the common codec (if there are a plurality of common codecs, all the codecs are described in SDP Answer) as a first codec candidate (or as first codec candidates). If no common codec exists, the MGCF generates an SIP_183 message (session progress) that includes SDP Answer describing all the codecs that can be used in the IMS core network 40 as first codec candidates.

Alternatively, if no common codec exists, it is preferable that the MGCF generate an SIP_183 message (session progress) that includes SDP Answer describing a codec that has a transmission rate closest to the transmission rate of one of the codecs that can be used in the terminating network, among all the codecs that can be used in the IMS core network 40, as a first codec candidate. By doing so, the transmission rate of the codec temporarily decided to be used at the originating side is made close to the transmission rate of the codec used at the terminating side, reducing the bandwidth waste.

The MGCF (available-codec signaling section) sends the SIP_183 message (session progress) to the originating UE. The SIP_183 message (session progress) reaches the originating UE through the BGCF, the S-CSCF, and the P-CSCF. The UE temporarily decides, that is, selects, the codec that should be used, from the value of SDP Answer in the received SIP_183 message (session progress). Specifically, the UE temporarily selects a common codec that belongs to the intersection of the codecs supported by the UE and the codec(s) signaled from the MGCF, as the codec to be actually used by the UE.

If the codec (s) signaled from the MGCF can be used in the IMS core network 40 and also in the terminating network, the codec temporarily selected by the UE to be used can also be used in the terminating network. If the codec(s) signaled from the MGCF can be used in the IMS core network 40 but cannot be used in the terminating network, the codec temporarily selected by the UE to be used cannot be used in the terminating network and is used between the UE and MGW only. In that case, the MGW performs code conversion between the codecs.

As described above, the first codec candidate is used to temporarily determine a codec to be used. It is inferred that the codecs that can be used in the terminating communication apparatus 52 are included in the codecs that can be used in the external terminating network 50. Since the first codec candidate, which is used to temporarily determine a codec to be used, is specified according to the codecs that can be used in the external terminating network 50, there is a higher possibility that the codec to be used and the codec that can be used in the terminating communication network 52 will match when compared later. If they match, the resources temporarily ensured for the codec to be used can be used without change for voice communication between the originating UE and the MGW, so that the time required for preparing for the voice communication may be reduced.

Next, the UE generates, according to the SDP, SIP_PRACK that includes 2nd SDP Offer indicating the selected codec to be used, which is a codec-to-be-used notification, and sends SIP_PRACK to the core network 40. SIP_PRACK is received by the P-CSCF (codec-to-be-used-notification receiver) and reaches the MGCF through the S-CSCF and the BGCF (see Fig. 3B). The MGCF uses the H. 248 protocol to signal to the MGW the codec temporarily decided by the UE to be used, and the MGW ensures the resources required for the codec.

The subsequent steps are the same as those described in the first embodiment with reference to Fig. 3B to Fig. 3D.

### Fourth embodiment

In the IMS core network 40, the AS 43 may determine one or more codecs that can be used in the terminating external network 50. In other words, the AS 43 may function as the terminating-network-codec determination section.

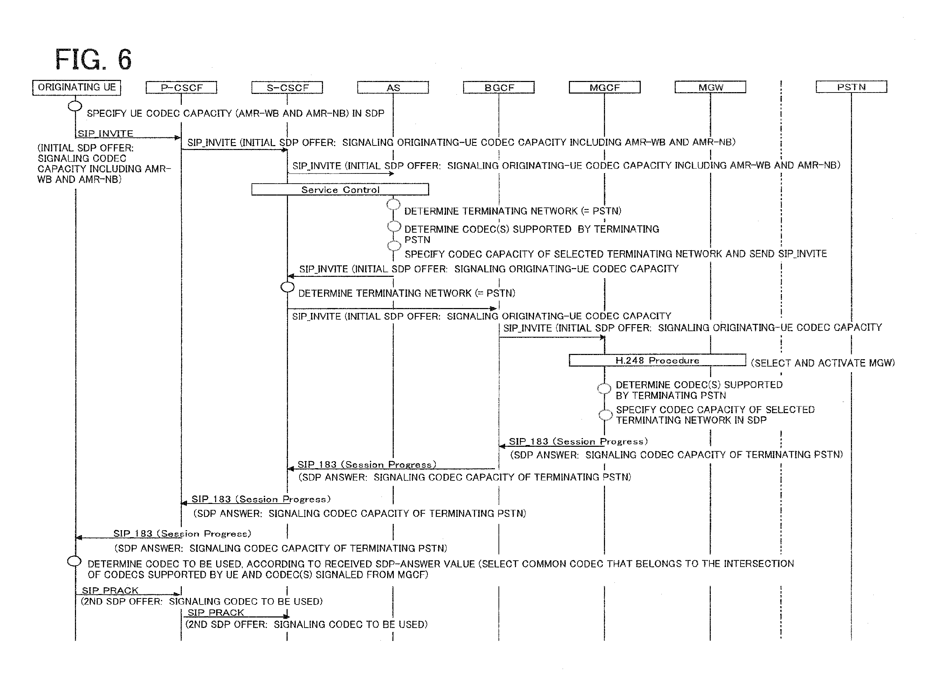

An example information flow in a communication system according to the fourth embodiment will be described with reference to Fig. 6. In the same way as in Fig. 3A to Fig. 3C, for convenience, the mobile communication network 10 and the EPC 30 are omitted from the figure. In the following description, it is assumed that the UE originates a call in order to perform voice communication with a communication apparatus 52 connected to an external network 50.

The telephone number of the communication apparatus 52 is input to the UE. The UE generates SIP_INVITE that includes Initial SDP Offer describing the UE codec capacity (codecs that can be used in the UE) according to the session description protocol (SDP). SIP_INVITE describes the telephone number of the communication apparatus 52 and the UE codec capacity (in this example, both the AMR-WB and the AMR-NB can be used in the UE). The reason for that SIP_INVITE describes the UE codec capacity is that it is requested by the IMS. The UE sends the generated SIP_INVITE to the P-CSCF, and the P-CSCF (connection-request receiver) transfers SIP_INVITE to the S-CSCF.

Upon receiving SIP_INVITE, the S-CSCF requests the AS to perform service control, if necessary, and also transfers that SIP_INVITE to the AS.

The AS (terminating-network determination section, terminating-network-codec determination section) determines the terminating external network on the basis of the telephone number of the communication apparatus 52. In this example, the terminating network is a PSTN, but the terminating network may be another circuit switching network, such as a PLMN, or another type of network. The AS determines at least one codec that can be used in the terminating network (that is, at least one codec supported by the terminating network), according to the terminating network. The AS generates SIP_INVITE that describes that codec. When generating this SIP_INVITE, the AS 43 may change the UE codec capacity described in Initial SDP Offer in the received SIP_INVITE to the codec capacity supported in the terminating network, or may add a new information element that describes the codec capacity supported in the terminating network to the received SIP_INVITE, separately from Initial SDP Offer that describes the UE codec capacity. The AS 43 transfers SIP_INVITE generated in the AS to the BGCF.

The S-CSCF also determines the terminating external network on the basis of the telephone number of the communication apparatus 52. In this example, the terminating network is a PSTN, but the terminating network may be another circuit switching network, such as a PLMN, or another type of network. The S-CSCF transfers SIP_INVITE generated in the AS to the BGCF without change.

The BGCF selects an MGCF suited to the PSTN, which is the terminating network, and transfers SIP_INVITE received from the S-CSCF 42 to the MGCF without change. The MGCF selects an MGW to be used for this voice communication and uses the H.248 protocol to activate the MGW.

The MGCF further determines whether or not there is any common codec that belongs to the intersection of a plurality of codecs that can be used in the IMS core network 40 and the codec that can be used in the terminating network. When a common codec exists, the MGCF generates an SIP_183 message (session progress) that includes SDP Answer describing the common codec (if there are a plurality of common codecs, all the codecs are described in SDP Answer) as a first codec candidate (or as first codec candidates). If no common codec exists, the MGCF generates an SIP_183 message (session progress) that includes SDP Answer describing all the codecs that can be used in the IMS core network 40 as first codec candidates.

Alternatively, if no common codec exists, it is preferable that the MGCF generate an SIP_183 message (session progress) that includes SDP Answer describing a codec that has a transmission rate closest to the transmission rate of one of the codecs that can be used in the terminating network, among all the codecs that can be used in the IMS core network 40, as a first codec candidate. By doing so, the transmission rate of the codec temporarily decided to be used at the originating side is made close to the transmission rate of the codec used at the terminating side, reducing the bandwidth waste.

The MGCF (available-codec signaling section) sends the SIP_183 message (session progress) to the originating UE. The SIP_183 message (session progress) reaches the originating UE through the BGCF, the S-CSCF, and the P-CSCF. The UE temporarily decides, that is, selects, the codec that should be used, from the value of SDP Answer in the received SIP_183 message (session progress). Specifically, the UE temporarily selects a common codec that belongs to the intersection of the codecs supported by the UE and the codec(s) signaled from the MGCF, as the codec to be actually used by the UE.

If the codec (s) signaled from the MGCF can be used in the IMS core network 40 and also in the terminating network, the codec temporarily selected by the UE to be used can also be used in the terminating network. If the codec(s) signaled from the MGCF can be used in the IMS core network 40 but cannot be used in the terminating network, the codec temporarily selected by the UE to be used cannot be used in the terminating network and is used between the UE and MGW only. In that case, the MGW performs code conversion between the codecs.

As described above, the first codec candidate is used to temporarily determine a codec to be used. It is inferred that the codecs that can be used in the terminating communication apparatus 52 are included in the codecs that can be used in the external terminating network 50. Since the first codec candidate, which is used to temporarily determine a codec to be used, is specified according to the codecs that can be used in the external terminating network 50, there is a higher possibility that the codec to be used and the codec that can be used in the terminating communication network 52 will match when compared later. If they match, the resources temporarily ensured for the codec to be used can be used without change for voice communication between the originating UE and the MGW, so that the time required for preparing for the voice communication may be reduced.

Next, the UE generates, according to the SDP, SIP_PRACK that includes 2nd SDP Offer indicating the selected codec to be used, which is a codec-to-be-used notification, and sends SIP_PRACK to the core network 40. SIP_PRACK is received by the P-CSCF (codec-to-be-used-notification receiver) and reaches the MGCF through the S-CSCF and the BGCF (see Fig. 3B). The MGCF uses the H. 248 protocol to signal to the MGW the codec temporarily decided by the UE to be used, and the MGW ensures the resources required for the codec.

The subsequent steps are the same as those described in the first embodiment with reference to Fig. 3B to Fig. 3D.

### Fifth embodiment

In the first to fourth embodiments, the first codec candidate, which is used to temporarily determine a codec to be used in the mobile communication apparatus 12, is determined according to the codecs that can be used in the external terminating network 50 to which the terminating communication apparatus 52 is connected. However, when the connection-request receiver (P-CSCF) receives a connection request (SIP_INVITE) from the mobile communication network 10, one or more codecs that can be used in the core network 40 may be simply signaled to the originating mobile communication apparatus as the first codec candidates without determining the codecs that can be used in the terminating network. If codecs that can be used in the core network 40 are set to the first codec candidates, which are used to temporarily determine a codec to be used, there is a low possibility that the codec to be used and the codec that can be used in the terminating communication network 52 will match when compared later. However, if they match, because the resources temporarily ensured for the codec to be used can be used without change for voice communication between the originating mobile communication apparatus 12 and the MGW 46, the time required for preparing for the voice communication may be reduced.

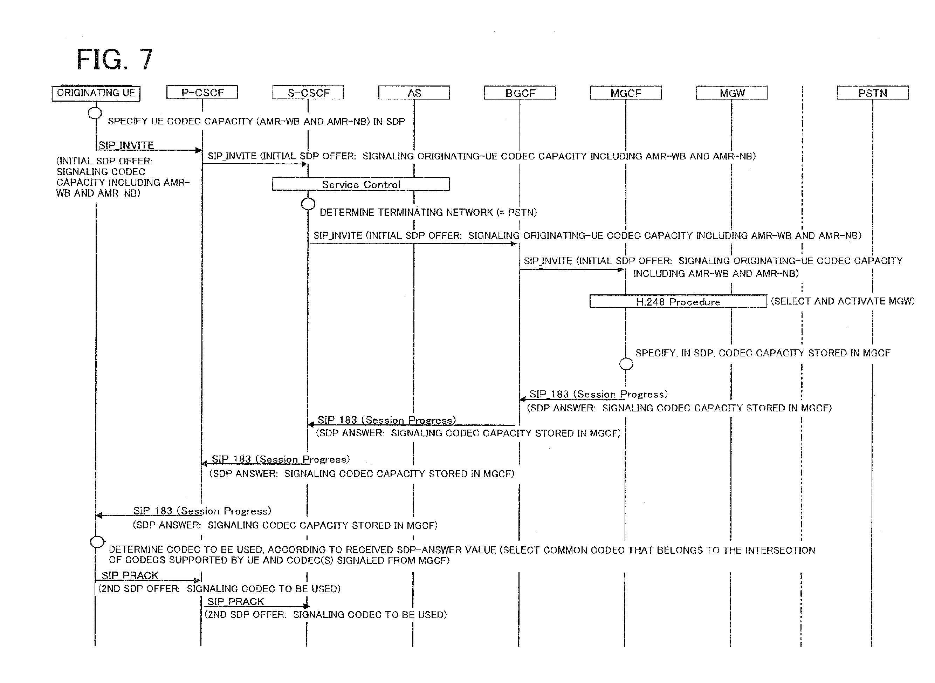

An example information flow in a communication system according to the fifth embodiment will be described with reference to Fig. 7. In the same way as in Fig. 3A to Fig. 3C, for convenience, the mobile communication network 10 and the EPC 30 are omitted from the figure. In the following description, it is assumed that the UE originates a call in order to perform voice communication with a communication apparatus 52 connected to an external network 50.

The telephone number of the communication apparatus 52 is input to the UE. The UE generates SIP_INVITE that includes Initial SDP Offer describing the UE codec capacity (codecs that can be used in the UE) according to the session description protocol (SDP). SIP_INVITE describes the telephone number of the communication apparatus 52 and the UE codec capacity (in this example, both the AMR-WB and the AMR-NB can be used in the UE). The reason for that SIP_INVITE describes the UE codec capacity is that it is requested by the IMS. The UE sends the generated SIP_INVITE to the P-CSCF 41, and the P-CSCF (connection-request receiver) transfers SIP_INVITE to the S-CSCF.

Upon receiving SIP_INVITE, the S-CSCF (terminating-network determination section) requests the AS to perform service control, if necessary, and determines the terminating external network on the basis of the telephone number of the communication apparatus 52. In this example, the terminating network is a PSTN, but the terminating network may be another circuit switching network, such as a PLMN, or another type of network.

The S-CSCF transfers SIP_INVITE to the BGCF. The BGCF selects an MGCF suited to the PSTN, which is the terminating network, and transfers SIP_INVITE to the MGCF. The MGCF selects an MGW to be used for this voice communication and uses the H.248 protocol to activate the MGW.

The MGCF generates an SIP_183 message (session progress) that includes SDP Answer describing a plurality of codecs that can be used in the IMS core network 40 (codecs stored by the MGCF) as first codec candidates.

The MGCF (available-codec signaling section) sends the SIP_183 message (session progress) to the originating UE. The SIP_183 message (session progress) reaches the originating UE through the BGCF, the S-CSCF, and the P-CSCF. The UE temporarily decides, that is, selects, the codec that should be used, from the value of SDP Answer in the received SIP_183 message (session progress). Specifically, the UE temporarily selects a common codec that belongs to the intersection of the codecs supported by the UE and the codecs signaled from the MGCF, as the codec to be actually used by the UE.

If the codec (s) signaled from the MGCF can be used in the IMS core network 40 and also in the terminating network, the codec temporarily selected by the UE to be used can also be used in the terminating network. If the codec(s) signaled from the MGCF can be used in the IMS core network 40 but cannot be used in the terminating network, the codec temporarily selected by the UE to be used cannot be used in the terminating network and is used between the UE and MGW only. In that case, the MGW performs code conversion between the codecs.

Next, the UE generates, according to the SDP, SIP_PRACK that includes 2nd SDP Offer indicating the selected codec to be used, which is a codec-to-be-used notification, and sends SIP_PRACK to the core network 40. SIP_PRACK is received by the P-CSCF (codec-to-be-used-notification receiver) and reaches the MGCF through the S-CSCF and the BGCF (see Fig. 3B). The MGCF uses the H.248 protocol to signal to the MGW the codec temporarily decided by the UE to be used, and the MGW ensures the resources required for the codec.

The subsequent steps are the same as those described in the first embodiment with reference to Fig. 3B to Fig. 3D.

### Other modifications

In the above-described embodiments, example codecs are the AMR-WB and the AMR-NB. Other codecs may be used in the communication system.

In the above-described embodiments, the core network 40 is an IMS core network. A core network according to the present invention is not limited to an IMS core network.

In the above-described embodiments, the identifier used to identify the terminating communication apparatus is the telephone number of the terminating communication apparatus. However, other identifiers may be used.

### Reference Numerals

10: Mobile communication network
12: Mobile communication apparatus
30: EPC
40: Core network
41: P-CSCF (connection-request receiver,
codec-to-be-used-notification receiver)
42: S-CSCF (terminating-network-codec determination section)
43: AS (terminating-network-codec determination section)
44: BGCF (terminating-network-codec determination section)
45: MGCF (terminating-network-codec determination section, available-codec signaling section, connection-request transmission section, connection-request-response receiver)
46: MGW
50: External network
52: Communication apparatus

## Claims

1. A core network connected to a mobile communication network and establishing voice communication between communication apparatuses, the core network comprising:
a connection-request receiver adapted for receiving a connection request that includes an identifier identifying a terminating communication apparatus, from the mobile communication network, to which an originating mobile communication apparatus is connected;
an available-codec signaling section adapted for signaling a codec candidate that should be used by the originating mobile communication apparatus to the originating mobile communication apparatus;
a connection-request transmission section adapted for sending a terminating-network connection request that specifies the terminating communication apparatus, to a terminating network to which the terminating communication apparatus is connected;
a connection-request-response receiver adapted for receiving, from the terminating network, a terminating-network connection request response that includes information indicating at least one codec that can be used in the terminating communication apparatus; and
a codec-to-be-used notification receiver adapted for receiving, from the originating mobile communication apparatus, a codec-to-be-used notification that indicates a codec to be used, which is selected to be actually used in the originating mobile communication apparatus;
wherein the available-codec signaling section is adapted for temporarily signaling a first codec candidate that should be used by the originating mobile communication apparatus to the originating mobile communication apparatus when the connection-request receiver receives the connection request;
wherein the available-codec signaling section is then adapted for determining whether or not the codec that can be used in the terminating communication apparatus, indicated by the terminating-network connection request response, matches the codec to be used, when the connection-request-response receiver receives the terminating-network connection request response; and
wherein the available-codec signaling section is adapted for specifying a second codec candidate that should be used by the originating mobile communication apparatus according to the codec that can be used in the terminating communication apparatus and is adapted for signaling the second codec candidate to the originating mobile communication apparatus, when the determination is negative.

2. The core network according to Claim 1, further comprising a terminating-network-codec determination section adapted for determining, on the basis of the identifier included in the connection request, at least one codec that can be used in the terminating network to which the terminating communication apparatus is connected, when the connection-request receiver receives the connection request,
wherein the available-codec signaling section is adapted for temporarily specifying the first codec candidate according to the at least one codec that can be used in the terminating network, determined by the terminating-network-codec determination section, when the connection-request receiver receives the connection request.

3. The core network according to Claim 2, wherein the core network is an IP-multimedia-subsystem (IMS) core network; and
the core network comprises a media gateway control function (MGCF) functioning as the terminating-network-codec determination section and the available-codec signaling section.

4. The core network according to Claim 2, wherein the core network is an IP-multimedia-subsystem (IMS) core network; and
the core network comprises a breakout gateway control function (BGCF) functioning as the terminating-network-codec determination section, and
a media gateway control function (MGCF) functioning as the available-codec signaling section.

5. The core network according to Claim 2, wherein the core network is an IP-multimedia-subsystem (IMS) core network; and
the core network comprises a serving call session control function (S-CSCF) functioning as the terminating-network-codec determination section, and
a media gateway control function (MGCF) functioning as the available-codec signaling section.

6. The core network according to Claim 1, wherein the available-codec signaling section is adapted for signaling, as the first codec candidate, a codec that can be used in the core network to the originating mobile communication apparatus, when the connection-request receiver receives the connection request.

7. A communication system comprising:
the core network according to Claim 1;
a mobile communication network connected to the core network; and
a mobile communication apparatus that connects to the mobile communication network;
wherein, the mobile communication apparatus is adapted for sending the connection request to the core network, and wherein when the mobile communication apparatus is notified of the first codec candidate and the second codec candidate from the available-codec signaling section, the mobile communication apparatus is adapted for selecting a common codec that belongs to the intersection of a plurality of codecs that can be used by the mobile communication apparatus and the first codec candidate or the second codec candidate, as a codec that is to be actually used by the mobile communication apparatus, and is adapted for sending the codec-to-be-used notification indicating the selected codec to be used, to the core network.
